# EUROPEAN PATENT APPLICATION

(11) **EP 1 855 233 A1**
(43) Date of publication of application: **14.11.2007**
(21) Application number: 06113882.2
(22) Date of filing: 12.05.2006
(51) Int. Cl.: G06Q 10/00

(54) **Method of online producing a personal tag for a stamp**

(71) Applicant: Sun Same Enterprises Co., Ltd., Yuan Kang City, Tinina Hsien, Taiwan (CN)
(72) Inventor: Shih, Shiny, Yuan Kang City, Tainan Hsien (TW)
(74) Representative: Schmitt, Armand

(57) **Abstract**

A method of online producing a personal tag for a stamp is practiced by a remote server (20) that stores multiple different types of stamps and different tag editing frames corresponding to the stamps. After a user designates tag data and selects a target stamp, the remote server (20) prepares a tag editing frame of the target stamp. The tag data is edited in the scope of the tag editing frame to form a personal tag. When the personal tag is completed, the personal tag is printed and then cut to fit to a tag window of the target stamp.

## Description

### 1. Field of the Invention

The present invention relates to a method of online producing a personal tag for a stamp, and more particularly to a method that allows a user to online produce a personalized tag as an identify label for the stamp.

### 2. Description of Related Art

According to different purposes, stamp manufactures can provide clients with various kinds of stamps to print names, dates, numbers or any pattern on paper. The stamps also can be grouped into the normal type or the self-inking type dependent on whether the stamps need to cooperate with a separate inking pad. The self-inking stamp, as the name implied, has incorporated with an inking pad that allows the stamp to be directly printed on paper without use of additional ink.

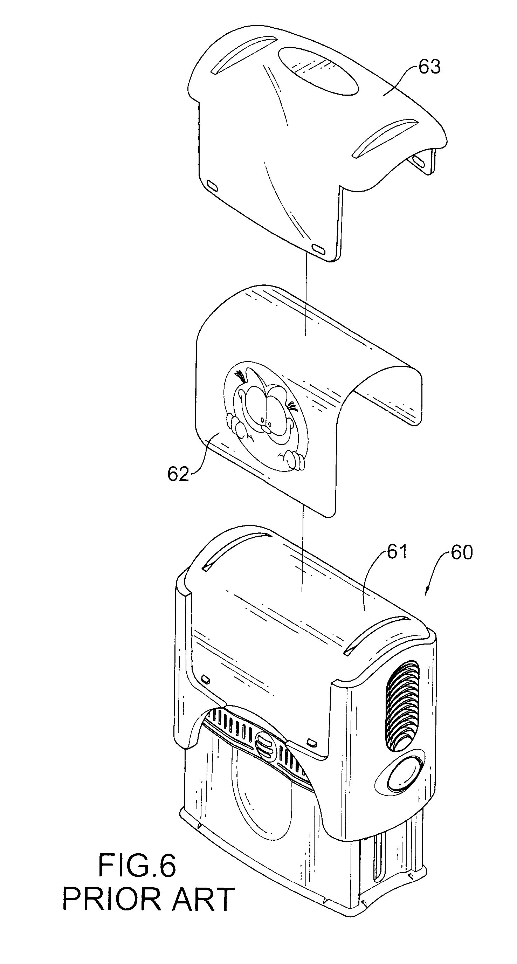

In accordance with clients' needs, each stamp can be designed to be unique and individualized to the owner. To fabricate a personal stamp, users can designate or design preferred patterns or words on a stamp pad, which is usually made of rubber, as the information to be printed. Without checking the stamp pad, however, to search and recognize a particular stamp among multiple ones is difficult since all the stamps may have the same appearance. With reference to Fig. 6, a convention stamp (60) is designed to have a tag window (not numbered) formed by a top (61) of the stamp and a transparent lid (63) mounted on the top (61), wherein a tag (62) can be held between the top (61) and the transparent lid (63) as an identify label. The identify label can facilitate the user in looking for a target stamp from multiple ones.

The pattern of the tag (62) can be identical or irrelevant to the pattern the stamp (60) printed. For most of stamp-owners, to replace the original tag (62) on the stamp (60) with a designed personal tag by themselves is not easy because sizes of the tags may vary with the different kinds of stamps. To accommodate with the different sizes, the stamp user needs to carefully determine the size of the tag (62) and prevent the required pattern from exceeding boundaries of the tag (62). As a result, the stamp users usually authorize the stamp manufacturer to produce the required tags.

Therefore, the present invention provides a new method of online producing a personal tag for a stamp to overcome the foregoing drawbacks.

The objective of the present invention is to provide a method of online producing a personal tag for a stamp, wherein any user who has a stamp with a tag display window is able to easily design and create a personalized tag fitting to the tag display window.

The method comprises the steps of designating and storing tag data, selecting a stamp model, opening a graphic editing frame corresponding to the selected stamp model, reading and displaying the tag data in the graphic editing frame; editing the tag data in the graphic editing frame to form a personal tag, determining whether the editing of the tag data is completed, storing the personal tag, checking whether the personal tag should be printed, and printing the personal tag by the printer.

Other objectives, advantages and novel features of the invention will become more apparent from the following detailed description when taken in conjunction with the accompanying drawings.

### IN THE DRAWINGS

Fig. 1 is a flow chart of a method of online producing a personal tag for a stamp in accordance with the present invention;
Fig. 2 is a graphic of a network that practices the method in accordance with the present invention;
Fig. 3 is a graphic of a login webpage displayed on a computer when a user accesses a remote server in the network of Fig. 2;
Fig. 4 is a graphic of a main webpage displayed on the computer when the user successfully entered the server in the network of Fig. 2;
Figs. 5A and 5B are graphics showing tag editing frames fitting to different types of stamps; and
Fig. 6 is an exploded perspective view of a conventional stamp.

The present invention is a method of online producing a personal tag for a stamp, and preferably can be implemented by a server. Users who want to make the personal tag can connect to the server to online edit the personal tag. After completing the personal tag, the tag can be printed and attached on the stamp.

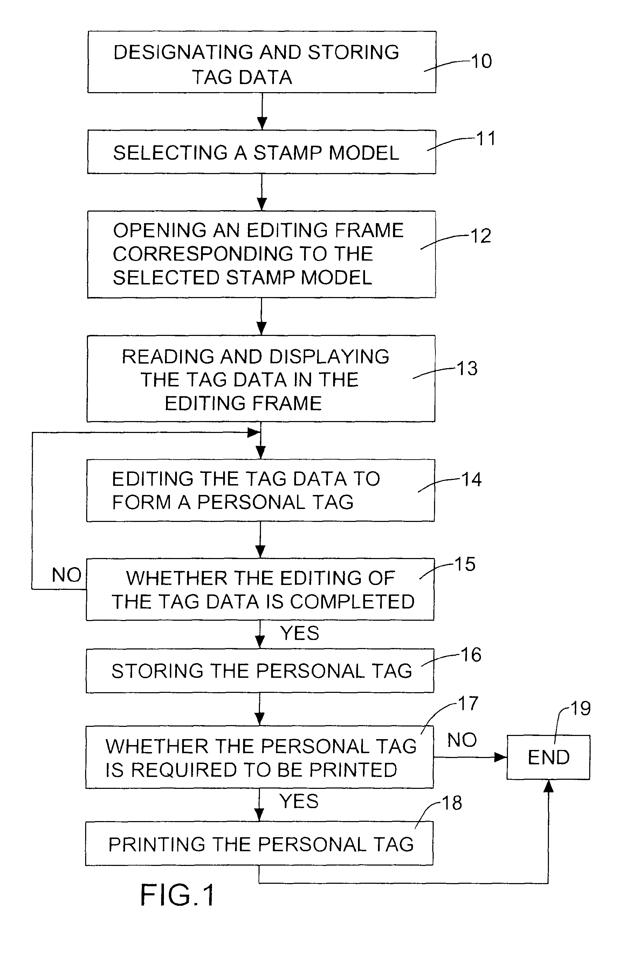

With reference to Fig. 1, the method in accordance with the present invention comprises the steps of designating and storing tag data (10), selecting a stamp model (11), opening an editing frame corresponding to the selected stamp model (12), reading and displaying the tag data in the editing frame (13); editing the tag data in the editing frame to form a personal tag (14), determining whether the editing of the tag data is completed (15), storing the personal tag (16), checking whether the personal tag is required to be printed (17), and printing the personal tag by the printer (18).

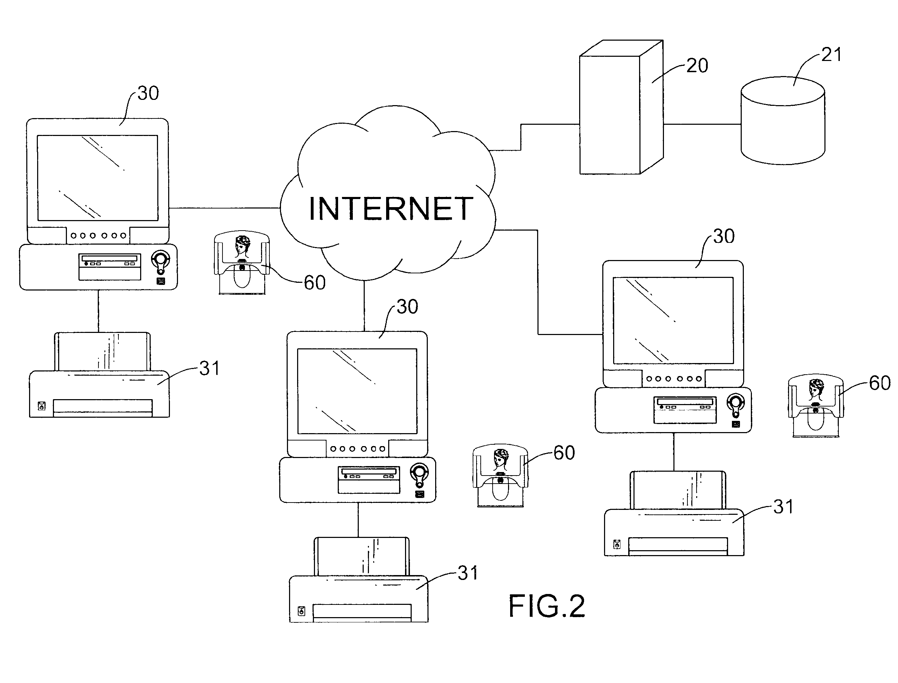

With reference to Fig. 2, a network including a remote server (20), a graphic database (21), user's local computers (30) and local printers (31) is illustrated to practice the foregoing steps.

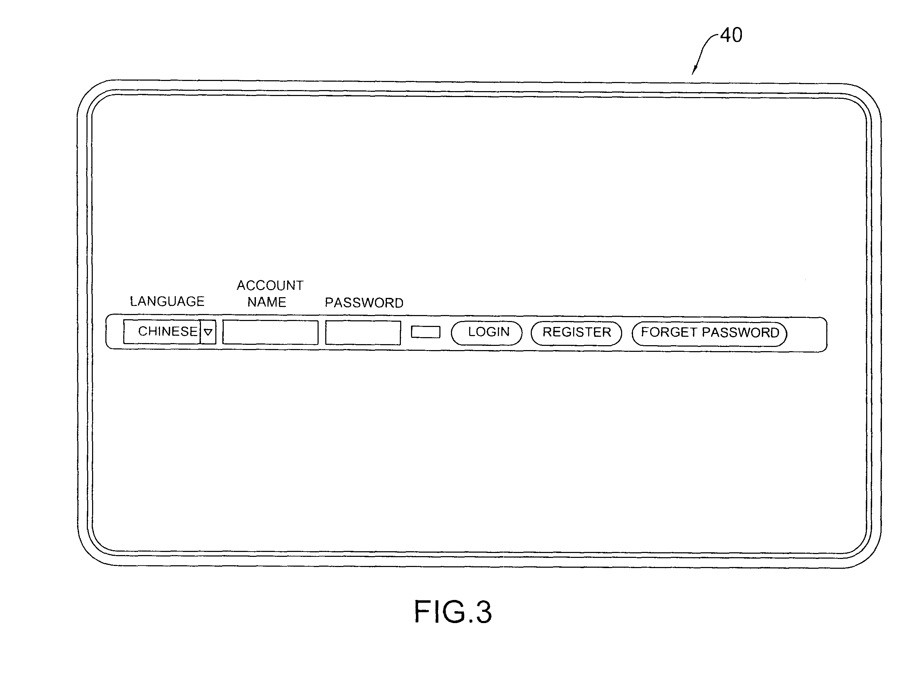

With further reference to Fig 3, the user's computer (30) cooperates with the server (20) as well as the graphic database (21) to produce the personal tag. After the computer (30) successfully connects to the server (20) through Internet, a login webpage (40) is displayed on the computer (30) and requires the user to enter an account name and a password. In other words, the server (20) can identify whether the user has authority to access the server (20).

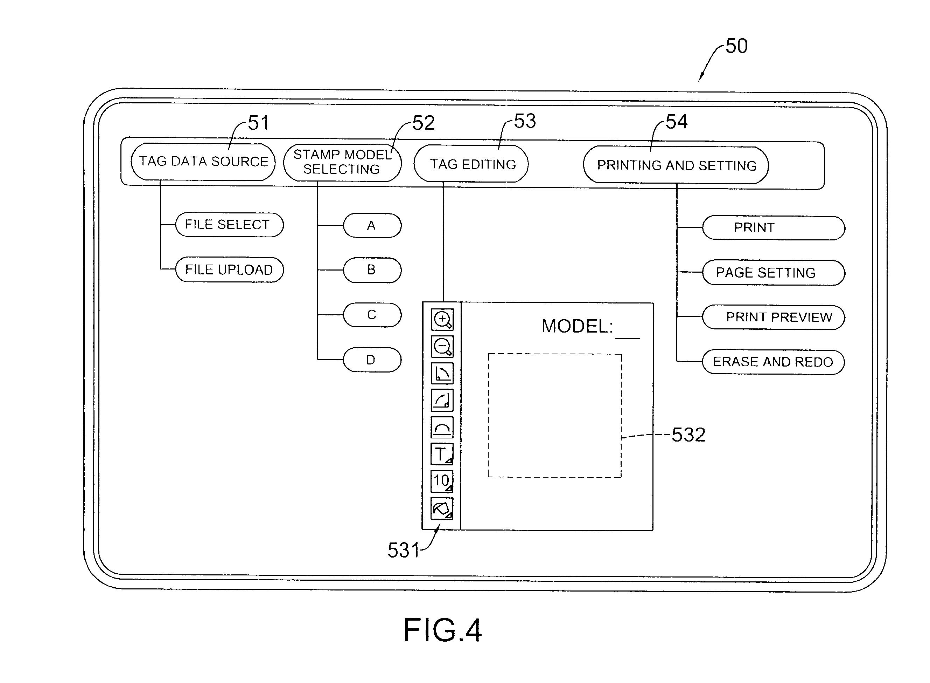

With further reference to Fig. 4, the user then enters a main webpage (50) when the account name and the password are correctly verified. First, the user has to designate the tag data. The main webpage (50) provides a function of "tag data source" (51) that further includes a "file select" and a "file upload" options allowing the user to designate the tag data from the graphic database (21) or from the local computer (30). If the user clicks the "file select" option, the tag data is retrieved from the graphic database (21). Otherwise, the "file upload" option requires the user to transmit a selected picture from the local computer (30) to the remote server (20). The tag data can be pictures, photos, words or other formats.

Second, when the tag data has been selected, a function of "stamp model selecting" (52) on the main webpage (50) shows multiple types of different stamps to be selected, for example types A to D. Specifications of the listed stamps under the "stamp model selecting" function (52) are stored in the server (20). In accordance with the stamp that the user possesses, i.e. the personal tag is to be applied to, the user designates a corresponding type from the multiple types (A-D).

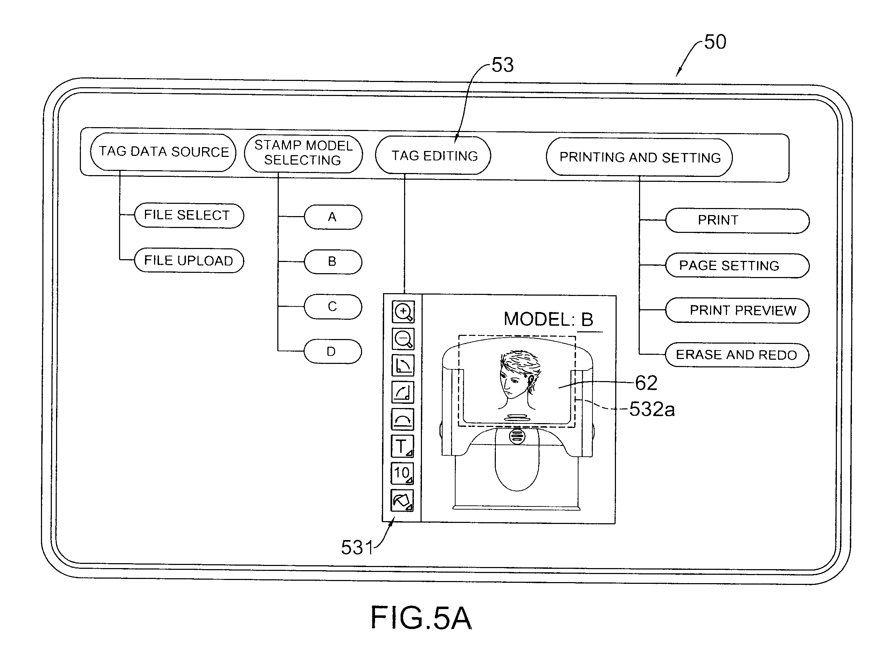

When the stamp model has been designated, a function of "tag editing" (53) on the main webpage (50) allows the user to create the personal tag. The tag editing function (53) has a separate window that displays an editing frame (532) and a tool bar (531). The previously selected tag data is shown in the editing frame (532), wherein the tag data can be edited using the multiple functions provided by the tool bar (531). With reference to Fig. 5A, the selected stamp with a tag window is shown and the editing frame (532a) is corresponded to the tag window. The tag data, for example a portrait of the user, is displayed within the editing frame (532a). After the user completes the editing of the tag data, the personal tag (62) fitting to the size of the tag window is formed.

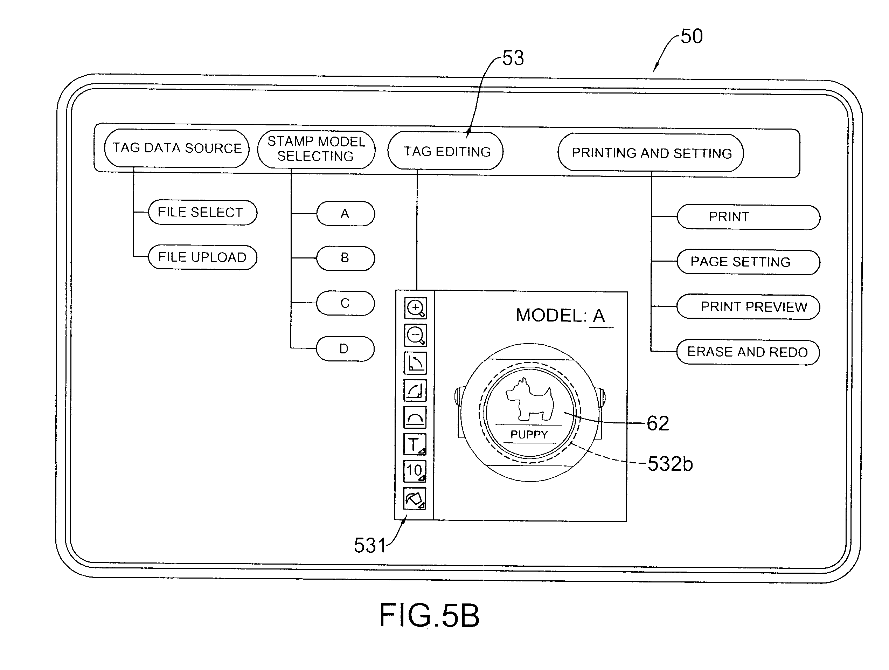

With reference to Fig. 5B, another type of the stamp with a circular tag window is shown. The tag editing frame (532b) corresponding to the tag window has a circular boundary, wherein a dog pattern as the personal tag is selected from the graphic database (21), text strings can be added below the dog pattern through the tool bar (531). The edited pattern as the personal tag (62) can be stored in the server (20), whereby the user is able to retrieve and print the pattern later.

With reference to Fig. 4, the main webpage (50) provides a function of "printing and setting" (54) with options such as "print", "page setting", "print preview" and "erase and redo". The function (54) allows the user to print the completed personal tag by the printer (31).

Based on the foregoing descriptions, the present invention provides a method of online producing a personal tag for stamps. For whether the stamp manufacturers or stamp users, any personal tag can be easily fabricated according to the above mentioned steps to fit different types of stamps. With these personal tags, these stamps will have specific and unique appearances and become more recognizable.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A method of online producing a personal tag for a stamp, the method comprising steps of:
connecting to a remote server (20) from a local computer (30);
designating and storing tag data (10);
selecting a stamp model (11) from a group consisting of different types of stamps with tag windows;
opening a graphic editing frame corresponding to the selected stamp model (12);
reading and displaying the tag data in the graphic editing frame (13);
editing the tag data in the graphic editing frame to form a personal tag (14);
determining whether the editing of the tag data is completed (15);
storing the personal tag (16) when the editing of the tag data is completed;
checking whether the personal tag should be printed (17); and
printing the personal tag (18).

2. The method as claimed in claim 1, wherein in the step of the tag data designating and storing, the tag data are selected from multiple pictures stored in a graphic database (21) of the remote server (20).

3. The method as claimed in claim 1, wherein in the step of the tag data designating and storing, the tag data are obtained from the local computer (30).

4. The method as claimed in claim 2, wherein in the step of the stamp model selecting, a menu showing the different types of stamps to be selected is displayed.

5. The method as claimed in claim 3, wherein in the step of the stamp model selecting, a menu showing the different types of stamps to be selected is displayed.

6. The method as claimed in claim 1, the method further comprises a step of user authority identifying.

7. The method as claimed in claim 2, the method further comprises a step of user authority identifying.

8. The method as claimed in claim 3, the method further comprises a step of user authority identifying.

9. The method as claimed in claim 4, the method further comprises a step of user authority identifying.

10. The method as claimed in claim 5, the method further comprises a step of user authority identifying.
